# EUROPÄISCHE PATENTSCHRIFT

(11) **EP 2 944 850 B1**
(45) Veröffentlichungstag und Bekanntmachung des Hinweises auf die Patenterteilung: **12.07.2017**
(21) Anmeldenummer: 14167912.6
(22) Anmeldetag: 12.05.2014
(51) Int. Cl.: F16K 3/24, F16K 37/00

(54) **Druckfester Positionssensor**
Pressure resistant position sensor
Capteur de position résistant à la pression

(43) Veröffentlichungstag der Anmeldung: 18.11.2015
(73) Patentinhaber: HAWE Hydraulik SE, 81673 München (DE)
(72) Erfinder: Zwingler, Engelbert, 85625 Baiern / Antholing (DE); Ott, Thomas, 85447 Fraunberg (DE); Neumair, Georg, 85402 Thalhausen (DE)
(74) Vertreter: Grosse Schumacher Knauer von Hirschhausen

(56) Entgegenhaltungen:
- DE-A1-102009 008 756
- US-A1- 2009 261 819
- US-A1- 2012 199 770
- US-A1- 2014 124 067

## Beschreibung

Die Erfindung betrifft ein Hydraulik-Wegesitzventil gemäß Oberbegriff des Patentanspruches 1.

Bei in elektrohydraulischen Systemen verwendeten Wegeventilen ist für eine übergeordnete Steuervorrichtung beispielsweise aus Sicherheitsgründen innerhalb eines Steuerprozesses ein Signal erforderlich, das eine bestimmte Position des Ventilelements innerhalb des Verstellhubs anzeigt. Deshalb werden solche Wegeventile, unabhängig davon, ob sie in leckagebehafteter Schieberbauart oder in leckagefreier Sitzbauart ausgeführt sind, mit wenigstens einem elektrischen Positionssensor ausgestattet, der der übergeordneten Steuerung das Positionssignal liefert.

Bei dem aus DE 10 2009 008 756 A bekannten Hydraulik-Sitzventil (Fig. 2) wird mittels des Positionssensors die Sperrstellung des Ventilkegels direkt in der den Ventilkegel enthaltender Bohrung abgegriffen. Der Positionssensor weist am Sensorkopf ein kapazitives Element auf, das in die Bohrung eintaucht und in der die Bohrung schneidenden Gehäusebohrung durch eine Dichtung nach außen abgedichtet ist. Der Ventilkegel hat angrenzend an die Sitzfläche eine Schulter, mittels derer die Sperrstellung des Ventilkegels am Ventilsitz im Schaltpunkt des Positionssensors ermittelt wird. Diese Position ist wegen unvermeidbarer Herstellungstoleranzen schwierig abzugreifen.

Bei einem aus US 2009/0261819 A1 bekannten Schieberventil wird direkt im inneren der Schieberbohrung eine vorbestimmte Position des Schieberkolbens durch ein erstes in die Schieberbohrung eintauchendes magnetisches Sensorelement und ein zweites an dem Schieberkolben angeordnetes magnetisches Sensorelement abgegriffen.

Bei einem aus US 2014/0124067 A1 bekannten Ventil taucht in einer Ausführungsform ein Positionssensor in die Bohrung eines Steuerkolbens ein und greift die Position einer am Steuerkolben geformten Schulter ab.

Bei einem aus US 2012/0199770 A1 bekannten Hydraulikventil ist der Positionssensor außerhalb der Schieberbohrung und von dieser durch eine Dichtung getrennt angeordnet. Zum Positionssensor führt ein mit dem Schieberkolben verbundener Stößel.

Bei dem aus EP 2562454 A1 bekannten Wege-Sitzventil einer Werkzeugmaschinen-Spannhydraulik ist der Positionssensor entweder als mechanisch betätigter elektrischer Schalter oder berührungslos arbeitender Positionssensor in einem Zwischengehäuse und außerhalb der mit Hydraulik-Medium druckbeaufschlagbaren Bohrung platziert. Zu dem Positionssensor führt vom Ventilelement durch eine Abdichtung der Bohrung ein Betätigungselement, das Bewegungen und/oder Positionen des Ventilelements innerhalb des Verstellhubs an den Positionssensor überträgt. Das Zwischengehäuse verlängert die Baulänge des Ventils unzweckmäßig. In der Abdichtung zwischen der druckbeaufschlagten Bohrung und dem Positionssensor wird bei Verstellbewegungen des Ventilelements Energie aufgezehrt und besteht die Gefahr von Leckage. Schließlich behindert der Positionssensor oftmals Betätigungs- und/oder Steuereinrichtungen des Ventilelements. Das Ventil des Positionssensors, ist vielteilig du somit teuer auch wegen hohen Montageaufwands.

Bei dem aus EP 2441992 A1 bekannten Hydraulik-Sitz-Ventil mit Positionssensor ist der Positionssensor außerhalb der das Ventilelement enthaltenden Bohrung, z. B. an einem Gehäuseende, platziert. Dieses Sitzventil zeichnet sich dadurch aus, dass der das Ventilelement bildende Ventilkegel innerhalb eines positiven Überdeckungsbereichs in die oder aus der leckagefreien Sperrstellung bewegt wird. Die exakte Abtastung beispielsweise der Sperrstellung ist nämlich für den Positionssensor wegen Herstellungs- und Montagetoleranzen schwierig. Deshalb wird der Schaltpunkt des Positionssensors in den positiven Überdeckungsbereich einjustiert, der nicht punktgenau die Sperrstellung sondern axial einen bestimmten Weg repräsentiert. Der positive Überdeckungsbereich bewirkt, dass in dem Wege-Sitz-Ventil eine zylindrische Außenfläche angrenzend an eine Sitzfläche des Ventilkegels mit einer zylindrischen Innenwand der Bohrung schieberartig so zusammenwirkt, dass innerhalb des positiven Überdeckungsbereiches nach Aufgeben der Sperrstellung oder vor Erreichen der Sperrstellung nur eine exakt vorbestimmte, geringfügige Leckage durch den Ventilsitz auftritt, und nicht die volle Menge oder der volle Druck. Diese geringe Leckage (Tröpfchenleckage) ist für die Funktion des Wege-Sitz-Ventils unerheblich, jedoch erleichtert der Überdeckungsbereich die Einjustierung des Schaltpunkts des Positionssensors unabhängig von Herstellungs- und Montagetoleranzen.

Die Gesamtoffenbarungen in EP 2562454 A1 und EP 2441992 A1 werden hiermit durch Rückbeziehung inkorperiert.

Der Erfindung liegt die Aufgabe zugrunde, ein Hydraulik-Wege-Ventil der eingangs genannten Art anzugeben, das in Axialrichtung kompakt baut, montagetechnisch einfach aus wenigen Bauteilen zusammensetzbar und dennoch hinsichtlich der Positionsabtastung des Ventilelementes funktionssicher ist.

Die gestellte Aufgabe wird mit den Merkmalen des Patentanspruchs 1 gelöst.

Da der Sensorkopf nicht nur druckfest (z.B. bis 500 bar) sondern auch gegen gegebenenfalls aggressive Hydraulik-Medien resistent ist kann er problemlos im druckbeaufschlagten Bereich der Bohrung platziert sein. Dadurch wird in Axialrichtung Platz gespart, sodass das Hydraulik-Wege-Ventil axial kompakt baut. Da ferner der Sensorkopf direkt auf das Ventilelement oder dessen Referenz oder ein daran angebrachtes Abtastglied anspricht, entfallen zusätzliche Teile zum Übertragen von Bewegungen und Positionen des Ventilelementes. Dies vereinfacht auch die Montage. Die Position des Positionssensors vermeidet ferner eine Behinderung von Betätigungs- oder Steuerungseinrichtungen für das Ventilelement vom jeweiligen Gehäuseende her. Diese Verwendung und Platzierung des Sensorkopfes eines elektrischen Positionssensors sind für Schieber-Wege-Ventile als auch Sitz-Wege-Ventile gleichermaßen brauchbar, jedoch besonders zweckmäßig für Wege-Sitz-Ventile in Spannhydrauliken elektronisch gesteuerter Werkzeugmaschinen, deren Computersteuerung auf präzise und aussagefähige Signale des Positionssensors angewiesen ist.

Der Sensorkopf kann am Ende eines Sensorkörpers angeordnet sein, der in eine zumindest in etwa quer durch Bohrung orientierte Gehäusebohrung eingebracht und darin abgedichtet festgelegt ist. Auf diese Weise lässt sich der Positionssensor bequem montieren und tauschen. Zur Festlegung und Abdichtung können, jeweils zweckmäßige Maßnahmen eingesetzt werden. Hierbei weisen der Sensorkörper ein Außengewinde und die Gehäusebohrung einen Innengewindeabschnitt auf, welcher durch einen zur Bohrung führenden Passbohrungsabschnitt verlängert sein kann. Der Sensorkopf ist dann zweckmäßig zylindrisch und, vorzugsweise, gewindefrei, sodass der Sensorkörper in den Innengewindeabschnitt eingeschraubt wird und den Sensorkopf in den Passbohrungsabschnitt so einführt, dass dieser ordnungsgemäß in der Bohrung positioniert ist. Zwischen dem Sensorkopf und dem Passbohrungsabschnitt kann eine Dichtung vorgesehen sein, beispielsweise ein O-Ring, sodass dort Leckagen aus der druckbeaufschlagten Bohrung nach außen und aus dem Gehäuse heraus vermieden werden. Die Einschraubtiefe des Sensorkörpers definiert, z. B. die Position des Sensorkopfs in der Bohrung.

Das Hydraulik-Wege-Ventil kann nicht nur mit einem Positionssensor ausgestattet sein, sondern es können durchaus in Umfangsrichtung und/oder in Axialrichtung der Bohrung zueinander versetzt mehrere Positionssensoren vorgesehen sein, die in der Bohrung unterschiedliche Positionen des Ventilelements abgreifen oder eine bestimmte Position redundant mehrfach abgreifen.

Speziell bei Werkzeugmaschinen kann eine Selbsthaltung des Hydraulik-Wege-Ventils in seinen Schaltstellungen zweckmäßig oder erwünscht sein. Dazu kann, vorzugsweise gemeinsam mit dem wenigstens einen Positionssensor sogar in der Bohrung, z. B eine mechanische Rastvorrichtung für zumindest eine Schaltstellung des Ventilelements vorgesehen sein. Alternativ könnte die Rastvorrichtung auch außerhalb der Bohrung an geeigneter Stelle untergebracht werden. Wegen der Rastvorrichtung kann beispielsweise eine Ventilfeder oder Federanordnung entfallen, speziell wenn das Ventilelement durch einen oder zwei gegensinnig arbeitende Magneten verstellt wird. Die Rastvorrichtung kann auch bei manueller Betätigung des Hydraulik-Wege-Ventils zweckmäßig sein.

Unabhängig davon, ob das Ventilelement manuell oder durch wenigstens einen Magneten verstellt wird, kann es zweckmäßig sein, wenn auf das Ventilelement zur Verstellung in einer Richtung axial ein Betätigungsstößel ausgerichtet ist, der jedoch aus nichtmagnetischem Material besteht, um keinen Einfluss auf die Abtastwirkung zwischen dem Ventilelement und dem Positionssensor zu nehmen.

In dem Wege-Sitzventil, zweckmäßig zum Einsatz in einer Spannhydraulik einer Werkzeugmaschine, ist das Ventilelement ein Ventilkegel, der wenigstens eine Sitzfläche aufweist und in wenigstens einer im Gehäuse montierten Ventilhülse verschiebbar geführt ist. Die Ventilhülse oder das Gehäuse weist zur Zusammenarbeit mit der Sitzfläche des Ventilkegels wenigstens einen Ventilsitz auf. Der Sensorkopf ist entweder axial neben einem Ende der Ventilhülse platziert, oder so, dass er in diese seitlich eintaucht und mit dem Ventilkegel zusammen wirkt. Bei dem Sitzventil ist am Ventilkegel angrenzend an die Sitzfläche eine im Durchmesser geringfügig verringerte Zylinderfläche vorgesehen, und es ist in der Ventilhülse eine zylindrische Passfläche zur schieberartigen Zusammenarbeit mit der Zylinderfläche vorgesehen. Die Zusammenarbeit findet zweckmäßig innerhalb eines axial begrenzten, positiven Überdeckungsbereiches statt. Der Schaltpunkt des Positionssensors wird zweckmäßig innerhalb des positive Überdeckungsbereiches einjustiert, beispielsweise durch präzise Platzierung der Gehäusebohrung, sodass das vom Positionssensor gelieferte Signal dann anliegt oder ausbleibt, wenn die Sitzfläche vom Ventilsitz gerade abhebt oder sich diesem nähert und dabei nur eine vorbestimmte, geringe Leckage zwischen der Passfläche und der Zylinderfläche vorliegt (Tröpfchenleckage).

Der Positionssensor kann ein magnetischer, induktiver oder magnetostriktiver Näherungsinitiator, ein Reed-Schalter, ein Hall-Schalter, oder dergleichen sein, und ist nicht nur druckfest sondern auch resistent gegen Hydraulikmedien.

Das Hydraulik-Wege-Ventil ist zweckmäßig ein 2/2- oder 3/2-Wege-Sitz-Ventil, insbesondere für eine Spannhydraulik einer Werkzeugmaschine. Dies schließt nicht aus, mit dem Ventil auch eine 3/3- oder 4/4-Wege-Funktion oder dergleichen zu realisieren.

Anhand der Zeichnung wird eine Ausführungsform des Erfindungsgegenstandes erläutert. Es zeigen:
- Fig 1: einen Teilachsschnitt eines Hydraulik-Wege-Ventils ausgeführt als Wege-Sitz-Ventil, ausgestattet mit einer optionalen Rast-Vorrichtung, mit einer 2/2-Wege-Funktion, und in drucklosem Zustand, und
- Fig. 2: ein Detail aus Fig. 1 in vergrößertem Maßstab.

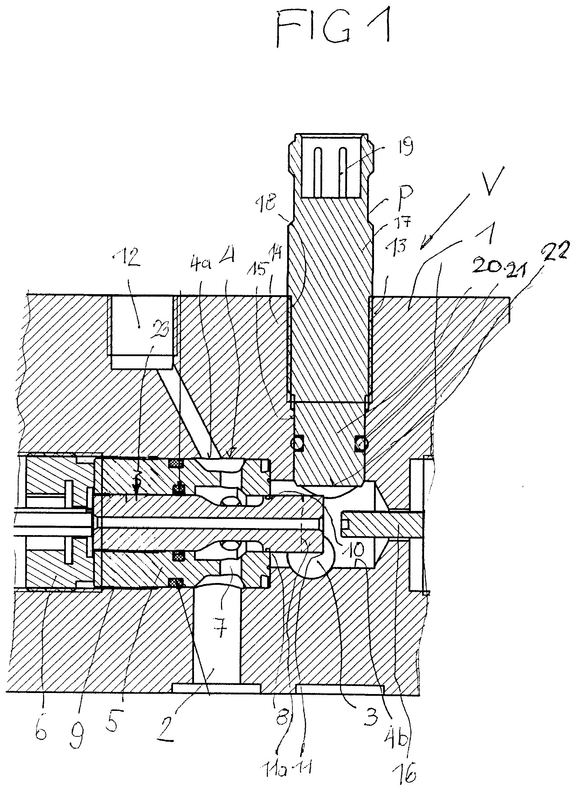

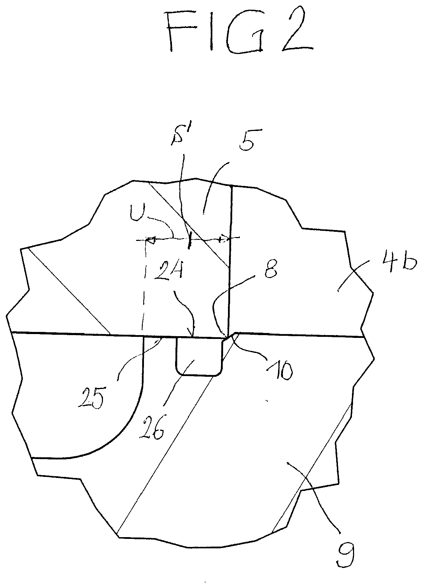

Obwohl in den Fig. 1 und Fig. 2 ein Hydraulik-Wege-Ventil V als Mehrwege-Sitzventil gezeigt ist, könnte das Hydraulik-Wege-Ventil V ein Schieberventil sein, und könnte anstatt der dargestellten 2/2-Wege-Funktion eine 3/2-, 3/3- oder sogar eine Funktion mit noch mehr Wegen und noch mehr Stellungen realisiert sein.

Das Hydraulik-Wege-Ventil V ist mit wenigstens einem elektrischen Positionssensor P ausgestattet, der ein Signal liefert, das eine aussagefähige Information an eine nichtdargestellte, übergeordnete elektronische Steuerung liefert, und eine bestimmte Position eines VentilElements 9, hier eines Ventilkegels, innerhalb eines Verstellhubes zwischen mindestens zwei unterschiedlichen Schaltstellungen repräsentiert.

In der gezeigten Ausführungsform des 2/2-Wege-Sitz-Ventils hat das Hydraulik-Wege-Ventil ein Gehäuse 1 mit seitlichen Druckanschlüssen 2,3, typischerweise einem Pumpenanschluss 2 und einem Verbraucheranschluss 3, die in Axialrichtung des Gehäuses zueinander versetzt sind und zwischen denen das Ventilelement 9 entweder eine Verbindung herstellt oder absperrt.

Im Gehäuse 1 ist eine Gehäusebohrung 4 vorgesehen, in der gezeigten Ausführungsform eine Stufenbohrung mit einem Bohrungsabschnitt 4a und einem anschließenden Bohrungsabschnitt 4b kleineren Innendurchmessers. Im Bohrungsabschnitt 4a ist eine Ventilhülse 5 durch beispielsweise eine axial durchgängige Schraube 6 positioniert. Die Ventilhülse enthält mit dem Druckanschluss 2 kommunizierende Querdurchgänge enthält und bildet am rechten Ende einen Ventilsitz 8. Der Ventilkegel 9, der in der Ventilhülse 5 abgedichtet verschiebbar geführt ist, weist zur Zusammenarbeit mit dem Ventilsitz 8 eine Sitzfläche 10 auf, beispielsweise eine konische Ringfläche (siehe auch Fig. 2). Der Ventilkegel hat am rechten Ende eine Referenz 11, beispielsweise eine Kante, oder trägt ein Abtastglied 11 a, das die Referenz 11 definiert. Der Ventilkegel besteht beispielsweise aus Stahl, wie auch die Ventilhülse 5 und das Gehäuse 1. Alternativ besteht zumindest das Abtastglied 11 a aus Metall.

Im Gehäuse 1 ist ferner ein Anschluss 12 als Option vorgesehen, der beispielsweise als Druckmessanschluss fungieren kann.

Der elektrische Positionssensor P ist in einer zumindest etwa quer zur Längsrichtung der Bohrung 4, 4a, 4b angeordneten Gehäusebohrung 13 abgedichtet angebracht. Die Gehäusebohrung 13 weist bei der gezeigten Ausführungsform ein Innengewinde 14 auf und einen bis in den Bohrungsabschnitt 4b reichenden zylindrischen Passbohrungsabschnitt 15.

Optional kann von der rechten Gehäuseseite ein Betätigungsstößel 16 in den Bohrungsabschnitt 4b ragen, der auf den Ventilkegel ausgerichtet ist, und beispielsweise mit einem nicht dargestellten Magneten zusammenwirkt, um den Ventilkegel in einer Schaltstellung abzufangen und in der entgegengesetzten Schaltrichtung zu bewegen. Der Betätigungsstößel 16 besteht zweckmäßig aus nicht magnetischem Material.

Der elektrische Positionssensor P, typischerweise und ohne Einschränkung ein Näherungsinitiator, der auf induktive, magnetische oder magnetostriktive Weise funktioniert, oder ein Reed-Schalter oder Hall-Schalter ist, weist in der gezeigten Ausführungsform einen zylinderförmigen Sensorkörper 17 mit einem Außengewindeabschnitt 18 auf, sowie einen in Verlängerung des Sensorkörpers 17 zentrisch angeordneten Sensorkopf 20 mit einem in der gezeigten Ausführungsform ebenen, innen liegenden Ende 22. Der Sensorkopf 20 ist in der gezeigten Ausführungsform zylindrisch und wird durch Einschrauben des Sensorkörpers 17 mit dessen Außengewinde 18 in den Innengewindeabschnitten 14 in die zylindrische Passbohrung 15 eingeführt, bis er mit dem Ende 22 in dem Bohrungsabschnitt 4b positioniert ist. Im Passbohrungsabschnitt 15 kann eine Dichtung vorgesehen sein, beispielsweise ein O-Ring 21 in einer Umfangs-Nut des Sensorkopfes 20. Am außen liegenden Ende des Sensorkörpers 17 ist ein Steckanschluss 19 zum Anbringen eines Verbindungskabels oder Bus-Kabels vorgesehen.

In der in Fig. 1 gezeigten Ausführungsform weist das Hydraulik-Wege-Ventil V optional eine Rast-Vorrichtung 23 auf, welche den Ventilkegel in beiden Schaltstellungen mechanisch und gegebenenfalls mit Federkraft verrastet, was beispielsweise von Verwendung von Betätigungsmagneten zum Verstellen des Ventilkegels zweckmäßig ist, um auch in stromlosem Zustand die jeweilige Schaltstellung zu halten. Die in Fig. 1 gezeigte Schaltstellung ist eine Sperrstellung, in der die Druckanschlüsse 2, 3 voneinander leckagefrei getrennt sind. Wird der Ventilkegel aus der in Fig. 1 gezeigten Position nach rechts verstellt, wobei die Sitzfläche 10 vom Ventilsitz 8 abgehoben wird, dann werden die Druckanschlüsse 2, 3 miteinander verbunden.

Fig. 2 verdeutlicht in vergrößertem Maßstab Merkmale der Darstellung von Fig. 1. Und zwar ist die Ventilhülse 5 innen mit einer fein bearbeiteten, (geschliffenen) zylindrischen Fläche 24 ausgebildet, die den Ventilkegel 9 führt, der angrenzend an die konische Sitzfläche 10 zur Zusammenarbeit mit der Kante des Ventilsitzes 8 eine Umfangs-Nut 26 aufweist, an die sich eine kurze zylindrische fein bearbeitete (geschliffene) Umfangsfläche 25 anschließt, deren Außendurchmesser geringfügig kleiner ist als der Innendurchmesser der Fläche 24 eine sogenannte Schieberpassung zum Beispiel mit 15 µm auf den Durchmesser bezogen). Auf diese Weise definieren die Flächen 24, 25 für das Ventilelement 9 einen positiven Überdeckungsbereich U einer vorbestimmten axialen Abmessung (z. B. kleiner 1,0 mm), wobei ein Schaltpunkt S des Positionssensors P zweckmäßig in den positiven Überdeckungsbereich U gelegt ist (Schaltpunkt S).

Die in den Fig. 1 und 2 gezeigte Schaltstellung des Ventilelements 9 (Ventilkegels) ist eine leckagefreie Sperrstellung, da die Sitzfläche 10 gegen den Ventilsitz 8 gepresst ist. Wird das Ventilelement 9 aus dieser Schaltstellung zunächst innerhalb des positiven Überdeckungsbereiches U nach rechts verstellt, so wird zwar die Sitzfläche 10 etwas vom Ventilsitz 8 abgehoben, jedoch bleibt dennoch die Verbindung zum Bohrungsabschnitt 4b auf eine minimale und vorbestimmte Leckage (typischerweise Tröpfchenleckage) beschränkt, definiert durch die Schieberpassung zwischen den Flächen 24, 25. Die Umfangs-Nut 26 ist zwecks einfacherer Bearbeitung vorgesehen, hat aber sonst keine Funktion. Dabei spricht der Positionssensor P den Schaltpunkt S an, ehe sich die Flächen 24, 25 trennen und den Durchgang vollends offenen.

Im Falle eines 3/2-Wege-Sitz-Ventils (nicht gezeigt) könnte im Gehäuse 1 eine weitere Ventilhülse ähnlich der Ventilhülse 5 vorgesehen sein, die für eine weitere Sitzfläche des Ventilkegels einen weiteren Ventilsitz aufweist. In diesem Fall könnte der Sensorkopf 20 diese weitere Ventilhülse seitlich durchdringen.

In den Fig. 1 und 2 ist ein einziger Positionssensor P dargestellt. Es könnten aus Redundanzgründen in Umfangsrichtung versetzt weitere solche Positionssensoren vorgesehen sein, die in der Berührung 4, 4a, 4b die selbe Position des Ventilelements 9 abtasten Alternativ oder Additiv könnte in Axialrichtung versetzt wenigstens ein weiterer Positionssensor P auf gleiche Weise platziert werden, dessen Sensorkopf im Hydraulik-Mediumdruckbeaufschlagten Bohrungsabschnitt 4b oder an anderer Stelle im druckbeaufschlagten Bereich platziert wird, um wenigstens eine weitere Position des Ventilelements innerhalb des Verstellhubs abzugreifen.

## Patentansprüche

1. Hydraulik-Wegesitzventil (V), mit einem in einer mit Hydraulik-Medium druckbeaufschlagbaren Bohrung (4, 4a, 4b) eines Gehäuses (1) zwischen mindestens zwei Schaltstellungen axial und relativ zu mindestens zwei seitlichen Druckanschlüssen (2, 3) und einem Ventilsitz (8) verstellbaren Ventilelement (9), und mit wenigstens einem elektrischen, wenigstens eine Position des Ventilelements (9) innerhalb des Verstellhubs berührungslos abgreifenden Positionssensor (P), wobei das Ventilelement (9) ein Ventilkegel mit wenigstens einer Sitzfläche (10) und der Positionssensor (P) im Gehäuse (1) mit einem Sensorkopf (20) in der mit Hydraulikmediumdruck beaufschlagbaren Bohrung (4, 4a, 4b) platziert ist, **dadurch gekennzeichnet, dass** der Positionssensor (P) einen druckfesten und gegen das Hydraulik-Medium resistent ausgebildeten Sensorkopf (20) zur Abtastung einer Referenz (11) des metallischen Ventilelements (9) oder eines metallischen Abtastglieds (11a) am Ventilelement (9) aufweist, dass der Ventilkegel in wenigstens einer im Gehäuse (1) montierten Ventilhülse (5) verschiebbar geführt ist, die zur Zusammenarbeit mit der Sitzfläche (19) den wenigstens einen Ventilsitz (8) aufweist, dass der Sensorkopf (20) entweder axial neben einem Ende der Ventilhülse (5) platziert ist oder in diese seitlich eintaucht, dass am Ventilkegel angrenzend an die Sitzfläche (10) eine im Durchmesser geringfügig verringerte Zylinderfläche (25) und in der Ventilhülse (5) angrenzend an den Ventilsitz (8) eine zylindrische Passfläche (24) zur schieberartigen Zusammenarbeit mit der Zylinderfläche (25) innerhalb eines axial begrenzten, positiven Überdeckungsbereiches (U) vorgesehen ist, und dass ein Schaltpunkt (S) des Positionssensors (P) innerhalb des positiven Überdeckungsbereichs (U) einjustiert ist.

2. Hydraulik-Wegeventil nach Anspruch 1, **dadurch gekennzeichnet, dass** der Sensorkopf (20) am Ende eines Sensorkörpers (17) angeordnet ist, der in eine zumindest in etwa quer zur Bohrung (4, 4a 4b) orientierte Gehäusebohrung (13) eingebracht und darin abgedichtet festgelegt ist, dass der Sensorkörper (17) ein Außengewinde (18) und die Gehäusebohrung (13) einen Innengewindeabschnitt (14) und einen zur Bohrung (4, 4a, 4b) führenden Passbohrungsabschnitt (15) aufweisen, dass der Sensorkopf (20) zylindrisch und vorzugsweise, gewindefrei ist, dass der Sensorkörper (17) in das Innengewinde (14) eingeschraubt und der Sensorkopf (20) in den Passbohrungsabschnitt (15) eingeführt ist, und dass zwischen dem Sensorkopf (20) und dem Passbohrungsabschnitt (15) eine Dichtung, vorzugsweise ein O-Ring (21), vorgesehen ist.

3. Hydraulik-Wegeventil nach Anspruch 1, **dadurch gekennzeichnet, dass** in Umfangsrichtung und/oder in Axialrichtung zueinander versetzt mehrere Positionssensoren (P) vorgesehen sind, deren Sensorköpfe (20) in der Bohrung (4, 4a, 4b) platziert sind.

4. Hydraulik-Wegesitzventil nach wenigstens einem der vorhergehenden Ansprüche, **dadurch gekennzeichnet, dass**, vorzugsweise in der Bohrung (4, 4a, 4b) und gemeinsam mit dem wenigstens einen Positionssensor (P), eine Rastvorrichtung (23) zum Festhalten zumindest einer Schaltstellung des Ventilkegels vorgesehen ist.

5. Hydraulik-Wegesitzventil nach wenigstens einem der vorhergehenden Ansprüche, **dadurch gekennzeichnet, dass** in der Bohrung (4, 4a, 4b) im Bereich des Sensorkopfes (20) auf den Ventilkegel axial ein BetätigungsStößel (16) aus nicht magnetischem Material ausgerichtet ist.

6. Hydraulik-Wegesitzventil nach wenigstens einem der vorhergehenden Ansprüche, **dadurch gekennzeichnet, dass** der Positionssensor (P) ein magnetischer oder magnetostriktiver Näherungsinitiator, ein Reed-Schalter, ein Hall-Schalter oder dergleichen ist.

7. Hydraulik-Wegesitzventil nach Anspruch 1, **dadurch gekennzeichnet, dass** das Wegesitzventil (V) ein 2/2- oder 3/2- Wegesitzventil, insbesondere für eine Spannhydraulik einer Werkzeugmaschine, ist.

## Claims

1. A hydraulic directional seated valve (V) with a valve element (9) movable axially in a bore (4, 4a, 4b), to which pressure may be applied with hydraulic medium, in a housing (1) between two switch positions and relatively to at least two lateral pressure connections (2, 3) and a valve seat (8) and with at least one electrical position sensor (P) contactlessly detecting at least one position of the valve element (9) within the movement stroke, wherein the valve element (9) has a valve poppet with at least one seating surface (10) and the position sensor (P) is positioned in the housing (1) with a sensor head (20) in the bore (4, 4a, 4b) to which hydraulic medium pressure may be applied, **characterised in that** the position sensor (P) includes a pressure-resistant sensor head (20), which is constructed to be resistant to the hydraulic medium, for scanning a reference (11) on the metallic valve element (9) or a metallic scanning element (11a) on the valve element (9), that the valve poppet is movably guided in at least one valve sleeve (5) mounted in the housing (1), which has the at least one valve seat (8) for cooperation with the seating surface (19), that the sensor head (20) is positioned either axially adjacent one end of the valve sleeve (5) or extends laterally into it, that provided on the valve poppet adjoining the seating surface (10) there is a cylindrical surface (25) of slightly reduced diameter and provided in the valve sleeve (5) adjoining the valve seat (8) there is a cylindrical mating surface (24) for slider-like cooperation with the cylindrical surface (25) within an axially limited, positive overlap region (U) and that one switch point (S) of the position sensor (P) is adjusted to be within the positive overlap region (U).

2. A hydraulic directional seated valve as claimed in Claim 1, **characterised in that** the sensor head (20) is arranged at the end of a sensor body (17) which is inserted into a housing bore (13) orientated at least approximately transverse to the bore (4, 4a, 4b) and is fixed therein in a sealed manner, that the sensor body (17) has an external screw thread (18) and the housing bore (13) has an internal threaded section (14) and a mating bore section (15) leading to the bore (4, 4a, 4b), that the sensor head (20) is cylindrical and, preferably, unthreaded, that the sensor body (17) is screwed into the internal screw thread (14) and the sensor head (20) is introduced into the mating bore section (15) and that provided between the sensor head (20) and the mating bore section (15) there is a seal, preferably an O ring (21).

3. A hydraulic directional seated valve as claimed in Claim 1, **characterised in that** provided offset from one another in the peripheral direction and/or in the axial direction there is a plurality of position sensors (P), the sensor heads (20) of which are positioned in the bore (4, 4a, 4b).

4. A hydraulic directional seated valve as claimed in at least one of the preceding claims, **characterised in that** a locking device (23) for fixing at least one switch position of the valve poppet is provided, preferably in the bore (4, 4a, 4b) and together with the at least one position sensor (P).

5. A hydraulic directional seated valve as claimed in at least one of the preceding claims, **characterised in that** axially aligned in the bore (4, 4a, 4b) in the region of the sensor head (20) on the valve poppet there is an actuating rod (16) of non-magnetic material.

6. A hydraulic directional seated valve as claimed in at least one of the preceding claims, **characterised in that** the position sensor (P) is a magnetic or magnetostrictive proximity sensor, a Reed switch, a Hall switch or the like.

7. A hydraulic directional seated valve as claimed in Claim 1, **characterised in that** the directional seated valve (V) is a 2/2- or a 3/2-way directional seated valve, particularly for a hydraulic clamping system of a machine tool.

## Revendications

1. Distributeur à valve hydraulique (V) avec un élément de valve (9) pouvant être ajusté, de manière axiale et par rapport à au moins deux raccords de pression (2, 3) latéraux, entre au moins deux positions de commutation et un siège de valve (8), dans un évidement (4, 4a, 4b) d'un boîtier (1), lequel évidement (4, 4a, 4b) peut être soumis à une pression au moyen d'un milieu hydraulique, ainsi qu'avec tout au moins un capteur de position (P) électrique pouvant prélever sans contact tout au moins une position de l'élément de valve (9) au sein de la course d'ajustement, selon lequel l'élément de valve (9) présente un clapet de valve qui est mis en place avec tout au moins une surface du siège (10) et le capteur de position (P) se trouvant dans le boîtier (1), et avec une tête du capteur (20) se trouvant dans l'évidement (4, 4a, 4b) pouvant être soumis à une pression au moyen d'un milieu hydraulique, **caractérisé en ce que** le capteur de position (P) présente une tête de capteur (20) qui résiste à la pression et qui est conçu pour résister au milieu hydraulique, laquelle tête de capteur (20) est destinée à la détection d'une référence (11) de l'élément de valve (9) métallique ou d'un organe de détection (11a) métallique au niveau de l'élément de valve (9), **en ce que** le clapet de valve est guidé de manière coulissante dans tout au moins un manchon (5) de valve monté dans le boîtier (1), lequel manchon (5) de valve présente le tout au moins un siège de valve (8) en vue de la coopération avec la surface du siège (19), **en ce que** la tête du capteur (20) est soit mise en place de manière axiale à côté d'une extrémité du manchon (5) de la valve, soit immergée de manière latérale dans celui-ci, **en ce que**, d'une part, une surface cylindrique (25) dont le diamètre est légèrement réduit est prévue au niveau du clapet de valve, de manière adjacente à la surface du siège (10), et **en ce que**, d'autre part, une surface d'ajustement (24) cylindrique est prévue dans le manchon (5) de la valve, de manière adjacente au siège de la valve (8), ceci en vue de la coopération conçue sous forme d'un coulisseau avec la surface cylindrique (25) à l'intérieur d'une zone de recouvrement (U) positive, délimitée de manière axiale, et **caractérisé en ce qu'**un point de commutation (S) du capteur de position (P) est réajusté à l'intérieur de la zone de recouvrement (U) positive.

2. Distributeur à valve hydraulique selon la revendication 1, **caractérisé en ce que** la tête du capteur (20) est disposée au niveau de l'extrémité d'un corps de capteur (17), lequel est inséré dans un évidement (13) du boîtier orienté tout au moins de manière transversale par rapport à l'évidement (4, 4a 4b) et lequel corps de capteur (17) est fixé de manière hermétique à l'intérieur de l'évidement (4, 4a 4b), **en ce que** le corps de capteur (17) présente un filetage externe (18) et **en ce que** l'évidement (13) du boîtier présente une section de filetage interne (14) ainsi qu'une section de l'évidement d'ajustement (15) aboutissant jusqu'à l'évidement (4, 4a, 4b), **en ce que** la tête du capteur (20) est cylindrique et, de préférence, dépourvue de filetage, **en ce que** le corps de capteur (17) est vissé dans le filetage interne (14) et la tête du capteur (20) est insérée dans la section de l'évidement d'ajustement (15) et **en ce qu'**une garniture étanche, de préférence un joint torique (21), est prévue entre la tête du capteur (20) et la section de l'évidement d'ajustement (15).

3. Distributeur à valve hydraulique selon la revendication 1, **caractérisé en ce que** plusieurs capteurs de position (P) sont prévus dans la direction circonférentielle et/ou dans la direction axiale, lesquels sont décalés les uns par rapport aux autres et dont les têtes de capteur (20) sont mises en place dans l'évidement (4, 4a, 4b).

4. Distributeur à valve hydraulique selon tout au moins l'une des revendications précédentes, **caractérisé en ce qu'**un dispositif à encliquetage (23) est prévu de préférence dans l'évidement (4, 4a, 4b) et en commun avec l'au moins un capteur de position (P), lequel dispositif à encliquetage (23) est destiné à la retenue de tout au moins une position de commutation du clapet de valve.

5. Distributeur à valve hydraulique selon tout au moins l'une des revendications précédentes, **caractérisé en ce qu'**un poussoir de commande (16), lequel est constitué d'un matériau non magnétique, est aligné de manière axiale sur le clapet de valve dans l'évidement (4, 4a, 4b), au niveau de la tête du capteur (20).

6. Distributeur à valve hydraulique selon tout au moins l'une des revendications précédentes, **caractérisé en ce que** le capteur de position (P) est un détecteur de proximité magnétique ou magnétostrictif, un commutateur à lame, un commutateur Hall ou un élément similaire.

7. Distributeur à valve hydraulique selon la revendication 1, **caractérisé en ce que** le distributeur à valve (V) est un distributeur à valve à 2 voies et 2 positions ou à 3 voies et 2 positions, prévu en particulier pour un système hydraulique de serrage d'une machine-outil.
